# EUROPEAN PATENT APPLICATION

(11) **EP 0 940 095 A1**
(43) Date of publication of application: **08.09.1999**
(21) Application number: 99200641.1
(22) Date of filing: 05.03.1999
(51) Int. Cl.: A43B 3/04, A43B 23/04, B29D 31/50, B29D 31/515

(54) **Article of footwear**

(30) Priority: 05.03.1998 NL 1008501; 05.06.1998 NL 1009330
(71) Applicant: Hevea B.V., 8102 GG Raalte (NL)
(72) Inventor: Van Oudvorst, Leonardus Ferdinand Frederic T., 7481 EL Haaksbergen (NL)
(74) Representative: Duxbury, Stephen

(57) **Abstract**

Article of footwear comprising:
- a sole (4),
- a leg (6), and
- a lacing panel (8) which is arranged on the leg and which is adjustable between a substantially open, loose position for putting on the foot covering easily and a substantially closed, tight position of use, wherein the lacing panel is connected to the leg by means of an injection moulded connection between the lacing panel and the leg.

## Description

The present invention relates to an article of footwear, to a method for making such an article and to the use of such for outdoor activities.

Rubber boots which are used for instance for hunting and hobby activities are known.

The present invention has for its object to provide an improved article of footwear.

According to a first aspect of the present invention a foot covering is provided as according to claim 1 or 4.

The adhesion of the lacing panel to the injection moulded leg is strong and watertight due to the properties of the injection moulded connection,the resulting footwear requiring substantially no final processing.

Further details and features of the present invention are also specified in the claims.

According to another aspect of the present invention a method is provided for making an article of footwear as according to claim 12, 13 or 14.

The complete adhesion of the leg to the lacing panel comes about during this stage of the process. After deforming of the footwear the adhesion between the leg and the adjustable lacing panel is fully formed herein and requires practically no final processing.

The lacing panel alone and/or the lacing panel together with the water tongue and/or lining can have a thickness which is slightly greater than the thickness of the leg of the footwear. A very good injection mould-formed connection can thus be made during injection moulding of the footwear.

A pre-formed lacing panel is preferably placed in the mould, against which a fluid, thermosetting polymer is then injection moulded in the form of a leg of the footwear, in order to preferably give the footwear of the present invention the form of a boot.

For this purpose the upper part of the leg is provided with a lacing panel which is adjustable in size and can consist of a material, for instance leather, other than for instance the injection moulded polyurethane of which the leg consists.

The adhesion of the lacing panel to the injection moulded leg is firm, strong and watertight owing to the properties of the injection moulded leg and the method of manufacturing the lining.

Full adhesion of the lacing panel to the injection moulded polyurethane leg is obtained during a normal process cycle without separate watertight-making means having to be added. For this purpose the adjustable lacing panel is stitched preferably onto the lining, the upper part of which, with the outline of the lacing panel, is omitted, and arranged around a last.

At the position of the stitched seam, the adjustable lacing panel can, together with the lining, have a thickness which is slightly greater than the space in the mould at that position. After closing of the mould the cavity in the mould, which is closed at the top by the lacing panel, is filled with for instance polyurethane, wherein during this stage of the process the full adhesion of the polyurethane to the lacing panel results. After deforming of the boot the adhesion between for instance polyurethane and adjustable lacing panel is fully formed and requires no final processing.

In the preferred embodiment the closure of the mould cavity at the top is formed by the lacing panel which is clamped between the last and outer shells of the mould.

In another embodiment use is made of a pressure edge of for instance metal or rubber with which the adhering edge of the adjustable lacing panel is pressed against the outer shells of the mould, whereby a seal is obtained at that position.

The invention will be further elucidated in the description following hereinbelow of several embodiments with reference to drawings, in which:
figure 1 shows a view of a first boot according to the invention;
figure 2 shows a cross-section through a first mould in which a first adhesion of the adjustable lacing panel to a boot according to the present invention takes place;
figure 3 shows a cross-section through the second mould in which a second adhesion of the adjustable lacing panel to a boot according to the present invention takes place;
figure 4 shows a view of another boot according to the invention;
figure 5 shows a cross-section through a mould in which the adhesion of the boot shown in figure 4 takes place.

A boot 1 according to the present invention comprises a lining 2, a sole 4, a leg 6 and an adjustable lacing panel 8 with water tongue 10.

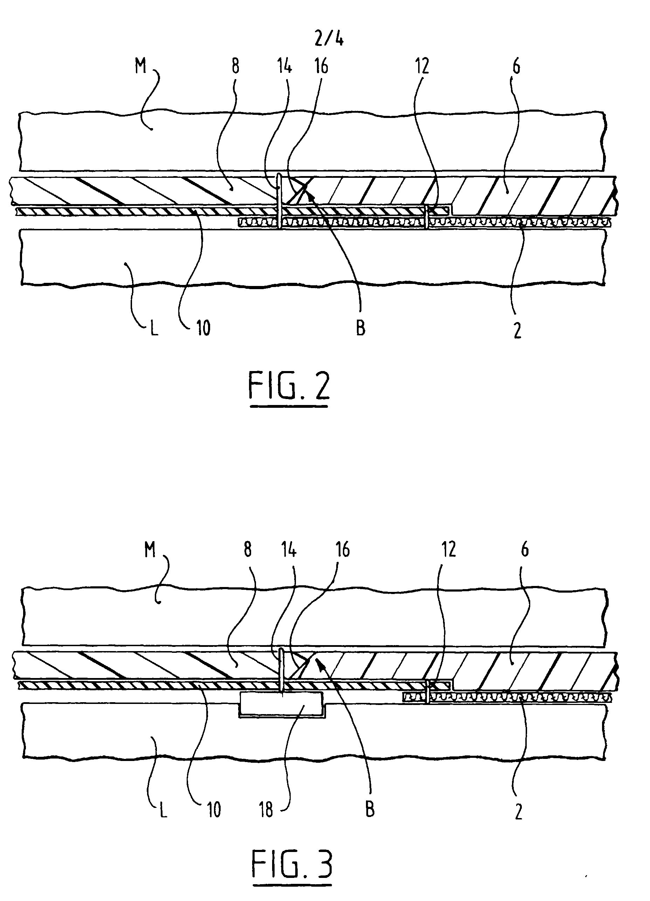

During production of boot 1 the lining 2 with adjustable lacing panel 8 is formed first by stitching together lining 2 and water tongue 10 by means of a stitched seam 12, and by stitching together lining 2, water tongue 10 and lacing panel 8 by means of a stitched seam 14 (fig. 2, 3).

This whole part is then placed in a mould M by arranging lining 2 with attached water tongue 10 and lacing panel 8 on a last L, closing mould M and subsequently filling the mould with polyurethane (PU) so as to form the boot.

During filling of mould M with PU an upper limit B of the PU is formed by the lacing panel 8 which is stitched to lining 2 and which is clamped between last L and mould M. The thickness of lining 2, water tongue 10 and lacing panel 8 and the distance between mould M and last L are mutually adapted so as to provide good sealing of the top part of the mould cavity and adhesion of the PU. It is particularly the properties of the applied PU which give the adhesion hereof to the adjustable lacing panel the desired strength, flexibility, smoothness and watertightness.

These properties of the adhesion of PU to the material of the lacing panel are also obtained by the manner in which the lining is assembled and positioned in the mould.

Lacing panel 8 is provided with a chamfered edge 16 which achieves that PU 6 can run as far as the stitched seam 14 and makes this stitched seam 14 watertight. The adhesion surface is also enlarged hereby, whereby the boot gains in strength and retains it during use, even after possible wear of the stitched seam 14. The PU 6 also runs through stitched seam 12, whereby this seam 12 retains a good strength after possible wear of the stitching.

Figure 3 shows the second embodiment wherein sealing of the lacing panel in the mould is further provided by a pressure edge 18 which is arranged on last L. During forming of the boot the pressure edge 18 presses lacing panel 8 with water tongue 10 against the outer shells of the mould, whereby a seal for the injection moulded PU is formed.

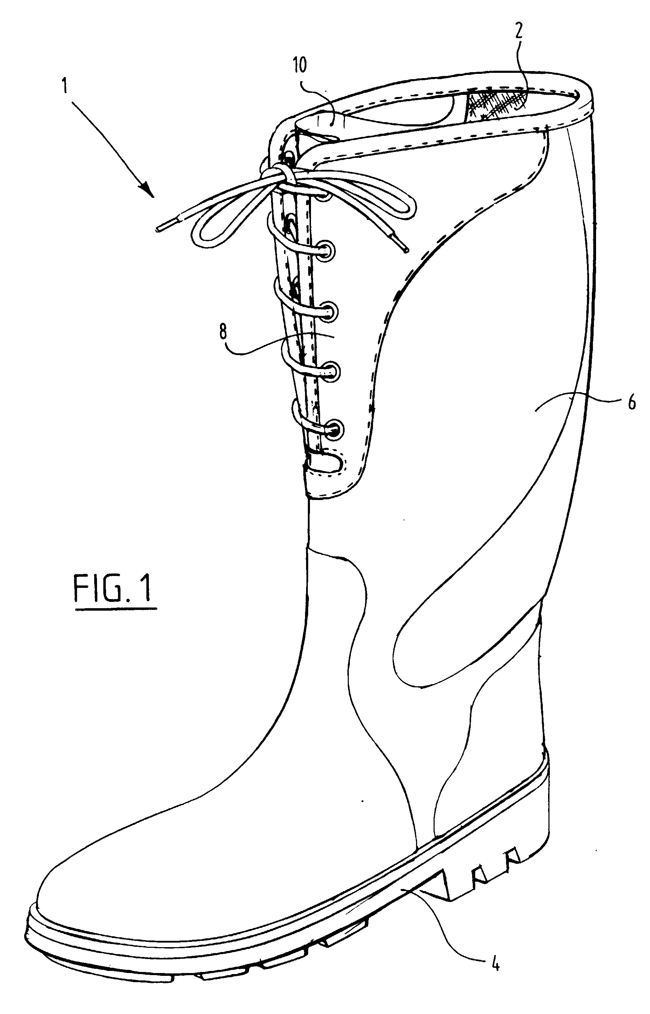

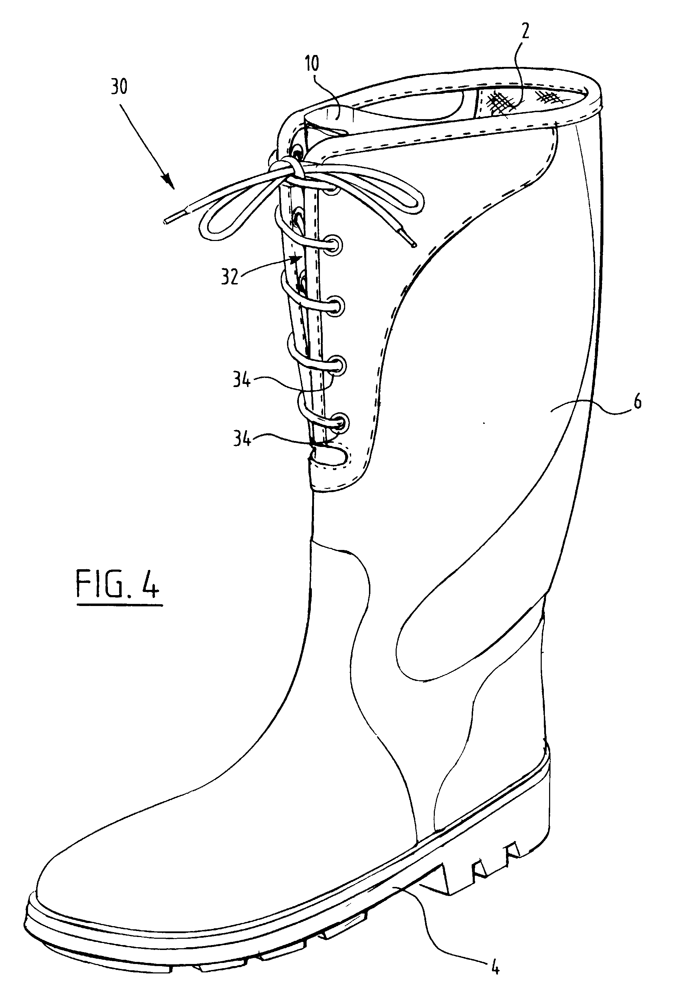

Just as the boot shown in figure 1, another boot 30 (figure 4) according to the present invention has a lining 2, a sole 4, a leg 6 and a water tongue 10. However, this embodiment lacks an independently adjustable lacing panel (8 in figure 1), since an incision 32 in leg 6 together with a number of lace eyelets 34 arranged adjacently of this incision 32 serve as lacing panel.

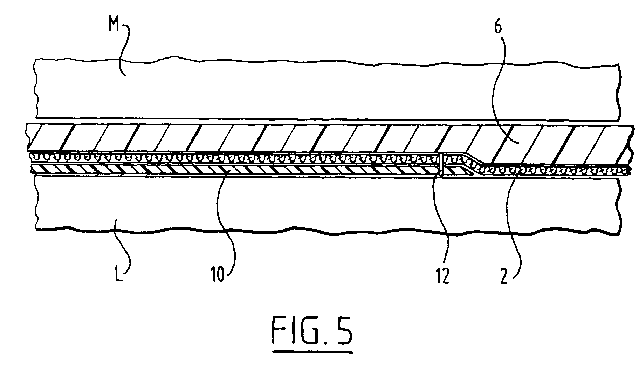

In the production of this boot 30 the water tongue 10 is stitched prior to injection moulding onto an inner side of lining 2 by means of stitched seam 12 (see figure 5). Lining 2 and water tongue 10 are then arranged on last L, whereby mould M is subsequently closed and filled with polyurethane PU (figure 5), whereby the water tongue adheres a very watertight manner to the lining to provide a strong adhesion.

After removal from the last, the incision 32 is made from above on the front of the boot in leg 6 and lining 2 to just above stitched seam 12. Several lace eyelets are arranged on either side of incision 32, thus enabling variation of the leg size as required.

In this embodiment the lining is not omitted at the position of the adjustable part of the leg but serves together with this part of the leg as basis for the lacing panel. Polyurethane is now sprayed onto this part whereby the lacing panel is created which consists of a part of the lining and the polyurethane injection moulded thereon.

The invention is not limited to the above description, the rights sought being defined by the following claims.

## Claims

1. Article of footwear comprising:
- a sole,
- a leg, and
- a lacing panel which is arranged on the leg and which is adjustable between a substantially open, loose position for putting on the foot covering easily and a substantially closed, tight position of use, wherein the lacing panel is connected to the leg by means of an injection moulded connection between the lacing panel and the leg.

2. Footwear as claimed in claim 1, further comprising a water tongue arranged on an inner side of the leg.

3. Footwear as claimed in either of the foregoing claims, further comprising a lining.

4. Article of footwear comprising:
- a sole,
- a leg, and
- a lacing panel which is associated with the leg and which is adjustable between a substantially open, loose position for putting on the footwear easily and a substantially closed, tight position of use, wherein the lacing panel and the leg are injection moulded from one piece.

5. Footwear as claimed in claim 4, further comprising an incision arranged in the lacing panel.

6. Footwear as claimed in claim 1, 2 and 3, wherein at least a part of the water tongue is situated between the leg and the lining.

7. Footwear as claimed in claims 4 and 5, wherein at least a part of the lining is situated between the water tongue and the lacing panel.

8. Footwear as claimed in any of the foregoing claims, further comprising one or more stitched seams which substantially connect to each other the lacing panel and/or water tongue and/or lining.

9. Footwear as claimed in any of the foregoing claims, wherein the leg and the lacing panel comprise combinable, thermosetting synthetic and/or natural material.

10. Footwear as claimed in claim 9, wherein the leg and/or the lacing panel comprise polyurethane.

11. Footwear as claimed in any of the foregoing claims, wherein the lacing panel alone and/or the lacing panel together with the water tongue and/or lining has a thickness which is slightly greater than the thickness of the leg of the footwear.

12. Method for making an article of footwear as claimed in any of the claims 1-3, 6-11, comprising the steps of inserting a pre-formed lacing panel of a footwear and/or a pre-formed leg of a footwear into an injection mould and injection moulding the leg and the lacing panel together in order to mutually connect the lacing panel and leg.

13. Method as claimed in claim 12, wherein the pre-formed lacing panel is placed in the mould and wherein a fluid thermosetting polymer is then injection moulded thereagainst in the form of a leg of a footwear so as to provide a footwear preferably with the form of a boot.

14. Method for making an article of footwear as claimed in claim 4 or 5, comprising the step of injection moulding a leg and lacing panel in one step in an injection mould.

15. Footwear as claimed in claims 1-11, obtainable by the method as claimed in any of the claims 12-14.

16. Use of an article of footwear as claimed in any of the claims 1-11 and 15 for outdoor activities.
